# EUROPÄISCHE PATENTSCHRIFT

(11) **EP 0 914 397 B1**
(45) Veröffentlichungstag und Bekanntmachung des Hinweises auf die Patenterteilung: **15.05.2002**
(21) Anmeldenummer: 97932804.4
(22) Anmeldetag: 11.07.1997
(51) Int. Cl.: C09J 131/04

(54) **WÄSSRIGER DISPERSIONS-KLEBSTOFF AUF BASIS VON POLYVINYLACETAT**
AQUEOUS ADHESIVE DISPERSION BASED ON POLYVINYL ACETATE
DISPERSION ADHESIVE AQUEUSE A BASE DE POLYACETATE DE VINYLE

(30) Priorität: 20.07.1996 DE 19629320
(43) Veröffentlichungstag der Anmeldung: 12.05.1999
(73) Patentinhaber: Henkel Kommanditgesellschaft auf Aktien, 40589 Düsseldorf-Holthausen (DE)
(72) Erfinder: GRÜNEWÄLDER, Bernhard, D-40721 Hilden (DE); PARENT, Bernhard, D-40625 Düsseldorf (DE); DZIALLAS, Michael, D-42781 Haan (DE); HALLER, Werner, D-40699 Erkrath (DE); WEGNER, Jürgen, D-40549 Düsseldorf (DE)
(86) Internationale Anmeldenummer: EP9703675
(87) Internationale Veröffentlichungsnummer: WO9803604

(56) Entgegenhaltungen:
- EP-A- 0 056 622
- DE-A- 3 501 791

## Beschreibung

Die Erfindung betrifft einen wäßrigen Dispersions-Klebstoff auf der Basis von Polyvinylacetat mit mehr als 80 Gew.-% an Vinylacetat als Bindemittel sowie einem Zusatz an pyrogener Kieselsäure sowie seine Herstellung und Verwendung.

Dispersions-Klebstoffe auf Basis von Polyvinylacetat werden unter anderem zum Verkleben von Holz verwendet (Holz-Leime). Ihre Viskosität liegt zwischen 6 und 25 Pas nach Brookfield. Mit diesem Viskositätsbereich sind folgende Vorteile verbunden: Die Dispersionen lassen sich leicht mit der Hand auch großflächig verteilen. Sie sind maschinengängig. Sie penetrieren teilweise in das zu verleimende Substrat und führen daher zu einer hohen Festigkeit. Nachteilig bei diesem Viskositätsbereich ist, daß die Klebstoffe nach der Applikation verlaufen, an senkrechten Flächen Nasen bilden und bei der Verarbeitung im Nut- und Federbereich entweder aus der Nut wieder herauslaufen oder tief in die Nut hineinlaufen. Im ersten Fall ist ein Verlaufen oder Ablaufen unerwünscht, da sich der Leim bei der Fügung der Teile nicht mehr dort befindet, wo er eigentlich sein sollte. Außerdem kommt es leicht zu Verunreinigungen, was vor allem dann unangenehm ist, wenn wasserfeste Leime (D3-Leime nach EN 204) eingesetzt werden. Wenn der Klebstoff andererseits tief in die Nut läuft, fehlt er im Flankenbereich. Außerdem läßt eine Verarbeitung solcher flüssiger Leime immer nur eine Verklebung einiger weniger Teile zu, was unwirtschaftlich ist. Im Modellbau ist es z.B. von Interesse, Leime zu haben, die bei der punktuellen Applikation genau an der Stelle verbleiben, an denen sie erwünscht sind und benötigt werden. Bei der Montage-Verleimung, bei der zum Teil über Kopf appliziert werden muß, verhalten sich dünnflüssige Klebstoffe ungünstig, da der Leim durch die Schwerkraft nach unten läuft, sich also im Flaschenboden befindet und es nur mit Mühe möglich ist, den Leim aus der Flasche durch die Tülle zum Substrat zu drücken, wo er dann ebenfalls unerwünscht verlaufen kann.

Es gibt auch wäßrige Dispersions-Klebstoffe auf Basis von Polyvinylacetat mit pastöser Konsistenz. Gemäß der DE 35 01 791 wird ein solcher Klebstoff erhalten, wenn zu einer PVAc-Dispersion 1 bis 2 % an pyrogener Kieselsäure und 4 bis 15 % eines hochsiedenden Lösemittels dazugegeben werden. Dadurch wird ein "Dübelleim" erhalten, der nicht abtropft und eine lange offene Zeit hat.
Dieser bekannte Klebstoff hat den Nachteil, daß die offene Zeit zwar verlängert wird, aber die Abbindezeit ebenfalls. Dadurch wird die Dauer - je nach Anwendung -, bis ein nächster Verarbeitungsschritt möglich ist, hinausgezogen Außerdem werden auch noch - verglichen mit der unmodifizierten Dispersion - die Wasserfestigkeit und die Wärmefestigkeit unter die zulässigen bzw. notwendigen Werte verringert.

Auch in der EP 0056622 A1 wird eine Polymerkomposition beschrieben, die aus 98,0 bis 99,9 Gew.-% eines in Wasser dispergierbaren Vinylesterpolymers und 2,0 bis 0,1 Gew.-% einer hydrophoben Kieselsäure besteht. Die Polymerkomposition ist pulverförmig und kann zur Herstellung von Klebemitteln, insbesondere für Tapeten verwendet werden.

Ausgehend von diesem Stand der Technik bestand die Aufgabe darin, einen praxisgerechten pastösen Dispersions-Klebstoff auf der Basis von Polyvinylacetat mit einer langen "offenen Zeit", aber mit einer "kurzen Abbindezeit" zur Verfügung zu stellen, der auch die übrigen Anforderungen an Holzleime erfüllt. Dazu zählen z.B., daß die Wasserfestigkeitsklasse des Leimes, gemessen nach EN 204 weiterhin erhalten bleibt, die Wärmefestigkeit nach Watt 91 von mehr als 6 N/mm² erreicht wird und die Hartholzverleimung ebenfalls gut ausfällt. Des weiteren zählen z.B. folgende Eigenschaften dazu: praxisnahe, einfache Verarbeitung und möglichst Lösemittelfreiheit sowie eine minimale Film-bildende-Temperatur (MFT) um 6 °C, um die Verarbeitung auch bei niedrigen Temperaturen zu ermöglichen. Selbstverständlich sollte der Dispersions-Klebstoff auch ausreichend lagerstabil sein. Um einen Klebstoff einzusetzen, der für das Klimagebiet T nach DIN 50019, Teil 1, geeignet ist (Anwendung im Innenbereich mit häufiger kurzzeitiger Einwirkung von abfließendem Wasser oder Kondenswasser und/oder eine langzeitige Einwirkung hoher Luftfeuchte bzw. Außenbereich mit entsprechendem Schutz vor Witterung) muß ein Klebstoff die Anforderungen der EN204 D3 erfüllen.

Die erfindungsgemäße Lösung ist den Patentansprüchen zu entnehmen. Sie besteht im wesentlichen darin, daß die PVAc-Dispersion weniger als 4 Gew.-% an hochsiedendem Lösemittel mit einem Siedepunkt bei Normaldruck von mehr als 160 °C und 0,1 bis 2,0 Gew.-%, bezogen auf die Dispersion, an pyrogener Kieselsäure enthält, wobei die Kieselsäure mit Mischungen benetzbar ist, die mindestens 40 Volumen-Teile Wasser und höchstens 60 Volumen-Teile Methanol enthalten.

Es wird also kein hochsiedendes Lösungsmittel wie z.B. Butyldiglykolacetal zugesetzt. Da derartige hochsiedende Lösungsmittel bereits in den PVAo-Dispersionen enthalten sein können, ist die Menge an hochsiedendem Lösungsmittel in dem erfindungsgemäßen Klebstoff kleiner als 4 und vor allem weniger als 3 Gew.-%, bezogen auf die Dispersion. Unter einem "hochsiedendem Lösemittel" soll ein Lösemittel mit einem Siedepunkt bei Normaldruck von mehr als 160 °C, insbesondere mehr als 200 °C und vor allem mehr als 240 °C verstanden werden. Geeignete Lösemittel sind z.B.: Diethylenglykol und seine Ester oder Ether mit insgesamt bis zu 18 C-Atomen. Konkret seien genannt: Butyldiglykolacetat, Polysolvan O, Dibutylphthalat, Dimethylphthalat, Di-(butylglykol)-phthalat, Benzylbutylphthalat, Propylglykolbenzoat, Diisobutylphthalat, Zitronensäure, Benzoesäureester, Sebacinsäureester, Diisoxylylphthalat, Diglykol, Me-Diglykol, Diglyme, Carbitol, Di-Et-Diglykol, Et-Diglykol-Ac, Bu-Diglykol, Di-Bu-Diglykol und Bu-Diglykol-Ac. Zum Teil haben die obengenannten Verbindungen weichmachende Eigenschaften oder verlängern die offene Zeit des Klebstoffes oder beinflussen die MFT.

Unter "pyrogener Kieselsäure" ist eine hochdisperse Kieselsäure zu verstehen, die durch Flammenhydrolyse herstellbar ist. Die durch die Silanol-Gruppen bedingte Hydrophilie ist vorteilhaft, aber nicht zwingend notwendig, verglichen mit einer wasserabstoßenden Kieselsäure, die durch Chlorsilane erhalten werden kann. Hydrophobe Kieselsäuren werden auch erhalten, indem hydrophile Kieselsäuren in einem zweiten Verfahrensschritt mit Organosilanen reagieren. Schließlich gibt es noch die Mischoxide, die durch gemeinsame Flammenhydrolyse mit einer zweiten flüchtigen Verbindung, die Oxide bilden.

Eine klare Abgrenzung zwischen nur hydrophilen und nur hydrophoben Kieselsäuren ist nicht immer möglich, da die Hydrophobie in erster Linie von dem Hydrophobierungsgrad abhängig ist. Der Übergang kann somit fließend sein. So gibt es zum Beispiel unter den hydrophoben Typen durchaus Kieselsäuren, deren Hydrophobierungsgrad so ausgerichtet ist, daß diese auch in polaren Systemen ihre Wirkung zeigen, da die Kieselsäure mit einem mehr oder weniger großen Anteil an SiOH-Gruppen belegt sein können. Da Polyvinylacetat-Dispersionen sowohl unpolare als auch polare Gruppen enthalten, erklärt das, daß sowohl hydrophile als auch hydrophobe Typen eine Wechselwirkung in diesen Systemen zeigen können: Zum einen über Wasserstoffbrückenbildung über polare Anteile, zum anderen aber auch über die unpolaren Anteile. In den Beispielen wird auf eine geeignete Meßmethode der Hydrophilie sowie auf einzuhaltende Meßwerte hingewiesen.

Die Menge an pyrogener Kieselsäure sollte im Bereich von 0,1 bis 2,0, vorzugsweise im Bereich von 0,3 bis weniger als 1, insbesondere im Bereich von 0,3 bis 0,8 Gew.-% liegen, bezogen auf die Dispersion. Kleinere Anteile führen im allgemeinen nur zu viskositätserhöhenden Effekten bzw. einer Veränderung der Rheologie, höhere Anteile führen im allgemeinen dazu, daß die verdickende Wirkung so hoch sein kann, daß eine Verarbeitung unmöglich wird oder daß die Dispersionen nicht lagerstabil sind und z.B. brechen.

Unter "Polyvinylacetat" sind Homo- und Copolymerisate des Vinylacetats mit mehr als 80, insbesondere mehr als 88 Gew.-% an Vinylacetat zu verstehen, bezogen auf die Monomeren insgesamt. Als Comonomere kommen in Frage: Ethylen (Poly-Ethylenvinylacetat) und Maleinsäureester mit Alkoholen bis zu 12 C-Atomen sowie die Ester des Vinylalkohols mit Carbonsäuren mit 2 bis 12, insbesondere 2 bis 5 C-Atomen. Comonomere können aus verschiedenen Gründen verwendet werden, z.B. um die Glastemperatur herabzusetzen. Dabei wird auch die Elastizität vergrößert. Zweckmäßigerweise werden reaktive Comonomere eingesetzt, um die Wasserfestigkeit zu verbessern, wie z.B. Isobutoxymethylacrylamid bzw. andere Ester mehrwertiger Alkohole, aber vor allem N-Methylol-acrylamid. In solchen Fällen (D3-Leime) enthält die Dispersion als Schutzkolloid in der Regel Polyvinylalkohol und als Katalysator saure Salze von z.B. Lewis-Säuren in geringen Mengen. Um Klebstoffe mit erhöhter Wasserfestigkeit herzustellen, muß nach dem heutigen Stand der Technik das Polyvinylacetat mit z.B. verkappten Formaldehydderivaten oder Dialdehyden vernetzt werden. In Frage kommen z.B. die Gruppe der "Methylolderivate" aber auch Glutardialdehyd und Malondialdehyd-Bisdiethylacetal. Letzterer wird im Hoechst-Patent EP 686 682 vom 03.06.1995 näher beschrieben. Unter Säureeinwirkung findet dann die gewünschte Vernetzung statt. Der pH-Wert der Polyvinylacetat-Dispersion beträgt weniger als 5,5, insbesondere weniger als 4,5 nach DIN 53785. Ein D3-Leim hat beispielsweise folgende Zusammensetzung: Hauptkomponente mit ca. 45 bis 48 % eines Copolymeren, bestehend aus z.B. 94 % Vinylacetat und 6 % N-Methylolacrylamid. Als Schutzkolloid werden 2 bis 5 Gew.-% an Polyvinylalkohol mit einem Hydrolysegrad von 88 bis 98 % eingesetzt. Als Filmbilde-Hilfsmittel werden 1,5 bis 2,5 Gew.-% an z.B. Butyldiglykolacetat und als Katalysator werden geringe Mengen an sauren Salzen von Lewis-Säuren eingesetzt. Der Rest ist Wasser. Üblicherweise werden auch geringe Mengen an Konservierungsmittel, Netzmittel oder Entschäumer eingesetzt.
Das Copolymer bzw. Polymer stellt - abgesehen vom Wasser - die Hauptkomponente des Dispersions-Klebstoffes dar, insbesondere beträgt sein Anteil 40 bis 60 und vor allem 45 bis 55 Gew.-%, bezogen auf die Dispersion. Es kann ebenfalls vorkommen, daß die Leime mit bis zu 20 Gew.-% an Füllstoffen versetzt werden.

Aus den obigen Komponenten wird der erfindungsgemäße Klebstoff hergestellt, indem die Dispersion vorgelegt wird und die Kieselsäure eingearbeitet wird. Es ist darauf zu achten, daß die Intensität der Scheerwirkung starken Einfluß auf die Endviskosität bzw. auf die Rheologie hat. So werden bei gleicher Konzentration an Kieselsäure aber unterschiedlicher Scheerwirkung andere Endviskositäten erhalten. Günstig ist, die Kieselsäure mit einem Dissolver kurz einzuarbeiten, ohne dabei die Dispersion zu zerstören. Es ist aber auch möglich, die Kieselsäure mit einem Planetenmischer in ca. 30 bis 40 min langsam einzuarbeiten.

Der erfindungsgemäße Dispersions-Klebstoff zeichnet sich im wesentlichen durch folgende positive Eigenschaften aus:
- thixotrope, cremige Konsistenz,
- lange offene Zeit,
- schnelles Abbindeverhalten,
- hohe Wärmestandfestigkeit und
- geringer oder kein Gehalt an hochsiedenden Lösemitteln.

Der erfindungsgemäße Dispersions-Klebstoff ist so thixotrop und cremig, daß er als Montage-Klebstoff aus der Kartusche, aus dem Schlauchbeutel, aus einer Zweikammer-Aerosoldose, aus einer Zweikammer-Druckdose, aus Spendern wie bei Zahnpasta oder Seifen oder aus der Tube applizierbar ist, ohne daß er an senkrechten Flächen abläuft oder beim Auftrag über Kopf abtropft. Er kann auch über Förderpumpen wie z.B. Zahnradpumpen oder Airless-Anlagen gefördert werden. Er ist standfest und läßt dennoch die notwendige Penetration ins Holz zu. Die Vorteile dieses Klebstoffes sind eine bessere Applikation, z.B. im Nut- und Federbereich, im Modellbau oder bei der Montage. Aber auch die Korpusverleimungen, die Dübelverbindungen, die Lamello-Verbindungen, die Vollholzbreitenverleimungen sowie die maschinelle Applikation des Klebstoffes mittels Düsen sind möglich, also alle üblichen konstruktiven Verbindungstechniken. Darüber hinaus kann der Klebstoff auch im hochfrequenten Feld (HF-Trocknung) oder im Heißsiegelverfahren eingesetzt werden. Ferner bieten derartige Klebstoffe Vorteile bei der Verleimung von sägerauhem Holz, z.B. weil sägerauhes Holz einen wesentlich höheren Klebstoffauftrag erfordert als gehobelte Hölzer. Der Vorteil liegt darin, daß wesentlich mehr Klebstoff appliziert werden kann, ohne daß dieser wegläuft. Er bleibt vielmehr standfest an Vertiefungen stehen. Außerdem kann der Preßdruck bei der Verleimung von sägerauhem Holz reduziert werden, da mehr Klebstoff zur Verfügung steht. In gewisser Weise kann von leicht spaltüberbrückenden Eigenschaften gesprochen werden.

Anwendungen unter extremen Bedingungen sind ebenfalls möglich. Es kann z.B. bei Temperaturen von +7 bis +60 °C gearbeitet werden, ohne daß die applizierbaren Stränge ablaufen. Es ist auch möglich, unter Vibration den Klebstoff zu applizieren, ohne daß dieser abläuft.

Die erfindungsgemäßen thixotropen wasserfesten Dispersions-Klebstoffe können - generell gesagt - überall dort eingesetzt werden, wo nicht unbedingt ein großflächiger Auftrag gefordert wird. Es ist aber auch generell möglich, z.B. mit einem Leimkamm flächig zu applizieren.

Die Werte der Abbindegeschwindigkeit liegen um ca. 20 bis 60 % über den Werten der unmodifizierten Dispersion und erst recht über den Werten der bekannten modifizierten Dispersion gemäß der DE 35 01 791. Das ist vor allem dann nützlich, wenn eine rasche Weiterverarbeitung vor allem in der Industrie oder im Handwerk aus wirtschaftlichen Aspekten im Vordergrund steht. Bei schnellen Abbindegeschwindigkeiten ist ein zügiges Weiterarbeiten möglich, da die Verklebung in kürzerer Zeit zu den notwendigen Anfangsfestigkeiten gelangt.

In der Regel korreliert ein schnelles Abbindeverhalten mit einer kurzen offenen Zeit. Im Gegensatz dazu ist bei den erfindungsgemäßen Dispersions-Klebstoffen auch die offene Zeit um bis zu 43 % länger als bei der unmodifizierten Dispersion. Das ist nützlich, da so eine genaue Fixierung der zu verklebenden Teile in einer angemessenen Zeit möglich ist. So ist es z.B. möglich, ganz komplizierte Teile mit Klebstoff zu versehen, sie dann zusammenzusetzen und schließlich endgültig unter Druck miteinander zu verkleben. Derartige Anforderungen werden zum Beispiel beim Bau einer Treppe gestellt. Ein Überschreiten der offenen Zeit würde zu Verklebungen ohne ausreichende Festigkeit führen.

Die Erfindung soll nun anhand von Beispielen im einzelnen beschrieben werden:

### I. Komponenten des Dispersions-Klebstoffes

1. Polyvinylacetat-Dispersion
a) Mowilith LDL 2520 W (= LDL 2520) mit den Bestandteilen:

| | | |
|---|---|---|
| Hauptkomponente | Vinylacetat | ca. 42 - 45 % |
| Vernetzungskomponente | N-Methylolacrylamid | ca. 3 % |
| Schutzkolloid | Polyvinylalkohol mit Hydrolysegrad 88 - 98 % | ca. 4 % |
| Filmbildehilfsmittel | Butyldiglykolacetat | 1,5 - 2,5 % |
| Katalysator | saure Salze, nämlich AlCl₃ (Lewissäuren) | geringe Mengen |
| Lösemittel | Wasser | |

b) Vinnapas DPN 16 (= DPN 16)
2. Pyrogene Kieselsäure
a) Aerosil 150 (= Ae 150)
b) HDK N 20 (= N 20)
c) HDK H 20 (= H 20)

3. Butyldiglykolacetat (= BDA)

### II. Herstellung und Eigenschaften der Dispersions-Klebstoffe

Die Kieselsäure sowie gegebenenfalls das Butyldiglykolacetat werden mit einem Laborrührer bei 350 Umdrehungen pro Min. innerhalb von 15 bis 20 Min. in der Dispersion eingearbeitet. Auch ein Planetendissolver ist zweckmäßig. Generell ist das Einarbeiten der Kieselsäure mit den unterschiedlichsten Rühraggregaten möglich. In Abhängigkeit von der Scherwirkung kann sich die notwendige Zeit zum Aufschluß der Kieselsäure entweder verlängern oder verkürzen. So liegen die Aufschlußzeiten bei einem Dissolver bei etwa 5 min, die eines Planetenrührwerks bei 30 bis 40 min. Wurde während der Einarbeitungsphase Luft in den Ansatz gebracht, ist eine Evakuierungsphase von etwa 10 min bei 100 mbar notwendig. Die Kontrolle erfolgt über eine Dichtemessung, wobei die Dichte ≥ der Dichte der unmodifizierten Dispersion sein sollte. Die Zusammensetzungen sind der Tabelle zu entnehmen.

Die erfindungsgemäßen Klebstoffe haben eine thixotrope geschmeidig-cremige Konsistenz. Ihr Festkörpergehalt, gemessen nach DIN 53189 liegt bei ca. 50 Gew.-%, ihre minimale Filmbildetemperatur (MFT), gemessen nach DIN 53787 unter 6 °C. Die Lager-Stabilität ist größer als 12 Monate bei 20 °C und länger als 3 Monate bei 40 °C. Ein verkürzter Lagertest über 3 Monate bei 40 °C wurde zu diesem Zweck angewandt.

### III. Klebetechnische Eigenschaften

Die Hartholzverleimung wurde an massiver, und ungedämpfter Rotbuche (Fagus Silvatica) mit einer Holzfeuchte von 8 bis 10 % und mit einer Rohdichte von > 0,65 g/cm³ gemessen, indem 5 Leisten mit den Abmessungen 20 cm x 4 cm x 2 cm so verleimt wurden, daß ein Format von 20 x 20 cm entstand. Die Jahresringe zur Probenbreite betrugen 65 bis 90 °. Der Klebstoffauftrag betrug einseitig 150 g/m², die Wartezeit bis zum Fügen und Pressen der Teile betrug 5 min bei 23 °C und 50 % relativer Luftfeuchtigkeit. Der Preßdruck betrug 0,5 N/mm². Der Prüfkörper wurde dann 7 Tage im Normklima (23 °C, 50 % relative Luftfeuchtigkeit) gelagert und anschließend einem Bruchtest unterzogen. Mit einem Stecheisen wurde dazu im begradigten Hirnholzbereich versucht, die Hölzer unter Zuhilfenahme eines Hammers voneinander zu trennen.
Beurteilt wurde das Bruchbild und der Faserausriß. Die Hartholzverleimung war in allen Fällen des erfindungsgemäßen Klebstoffes gut, d.h. der Faserausriß lag oberhalb 50 %.

Bestimmt wurde die "offene Zeit", in dem der Klebstoff bei 23 °C und 50 % relativer Luftfeuchtigkeit unter Zuhilfenahme eines Rakels 200 µm auf ungedämpfte Rotbuche (Fagus Silvatica) mit einer Rohdichte von > 0,65 g/cm³ und einer Holzfeuchte zwischen 8 bis 12 % aufgetragen wurde. Die Jahresringe zur Breitseite verliefen zwischen 65 und 90 °. Gemessen wurde die Zeit vom Auftrag des Klebstoffes bis zum Zeitpunkt der Filmbildung bzw. der Bildung einer Haut an der Oberfläche des Klebstoffes. Dabei war es wichtig, daß zum Zeitpunkt der Prüfung Windbewegung ausgeschlossen werden konnte. Die Zeit wurde also so definiert, daß noch nasser Klebstoff verblieb, es also in der Praxis noch zu guten Klebeverbindungen geführt hätte.

Die "Abbindezeit" wurde nach DIN 53253 "Bestimmung der Bindefestigkeit von Schaftverleimungen im Zugversuch" bestimmt. Der Test wurde unter klimatisierten Bedingungen bei 23 °C und 50 % r.F. durchgeführt. Alle Materialien, Prüfhölzer und Klebstoffe wurden unter diesen Bedingungen konditioniert. Der Klebstoffauftrag betrug 200 µm (Dicke), der Preßdruck betrug 0,35 N/mm² und die Preßzeit betrug 20 min. Danach wurden die Prüfkörper in einer Zerreißmaschine mit 50 mm/min Vorschubgeschwindigkeit zerrissen und der Maximalwert bestimmt. Von jeweils 15 Prüfkörper wurde dann das arithmetische Mittel errechnet.

Die "Wasserfestigkeit" wurde gemäß der DIN EN 204 D3 bestimmt, wobei die Prüfkörper nach der DIN 53254 hergestellt wurden. Der geforderte Mindestwert beträgt 2,00 N/mm² bei der Lagerungsfolge 3.

Die Wärmefestigkeit wurde anhand von Zugscherfestigkeiten nach 1 Stunde bei 80 °C an ungedämpfter Rotbuche nach Watt 91 (Wood Adhesive Temperature Test) bestimmt. Die Prüfkörper wurden nach DIN 53204 hergestellt. Der Wert sollte erfahrungsgemäß über 6 N/mm² liegen.

Die Dichte wurde nach DIN 53217 T2 bestimmt, die Viskosität nach Brookfield RTV ISO 2555 bei 23 °C und der pH-Wert nach DIN 53785 bei 23 °C.

Zur Bestimmung des Hydrophobierungsgrades einer Kieselsäure wird sie auf eine Glasplatte großflächig in einer Schichtdicke von etwa einem Millimeter aufgetragen. Dann werden einige Tropfen Methanol aufgeträufelt und beobachtet, ob die Kieselsäure vom Medium benetzt wird. Ist das der Fall, wird die Mischung aus 90 Volumen-Teilen (VT) Methanol und 10 VT Wasser in gleicher Weise aufgebracht. Ist eine Benetzung vorhanden, wird die Konzentrationsreihe durchgefahren, solange bis keine Benetzung mehr zu erkennen ist.

Je hydrophober eine Kieselsäure ist, desto höher muß die Konzentration an Methanol sein. Hydrophile Kieselsäuren hingegen zeigen bereits bei Wasser ohne einen Zusatz von Methanol eine deutliche Benetzung.

Tritt eine Benetzung bei einer Mischung aus 60 VT Methanol und 40 VT Wasser auf, ist die Kieselsäure brauchbar. Mit einer Mischung aus 40 VT Methanol und 60 VT Wasser benetzbare Kieselsäuren sind bevorzugt. Hervorragende Kieselsäuren lassen sich mit reinem Wasser (100 VT) benetzen. Als "überwiegend hydrophil" wird eine Kieselsäure bezeichnet, wenn sie mit Mischungen benetzbar ist, die mindestens 60 VT Wasser und höchstens 40 VT Methanol enthalten.

Die folgende Tabelle zeigt anhand einer Konzentrations-Reihe aus Methanol (99,5 %ig) und deionisiertem Wasser den Hydrophobierungsgrad verschiedener Kieselsäuren. Dabei bedeutet + eine positive Benetzung und - eine negative.

| Volumenteile | | Aerosil | | | | | | |
|---|---|---|---|---|---|---|---|---|
| Methanol | Wasser | R 202 | R 812 | R 805 | R 972 | HDK H20 | HDK N20 | Aerosil 150 |
| 100 | 0 | + | + | + | + | + | + | + |
| 90 | 10 | + | + | + | + | + | + | + |
| 80 | 20 | + | + | + | + | + | + | + |
| 70 | 30 | - | + | + | + | + | + | + |
| 60 | 40 | - | + | + | + | + | + | + |
| 50 | 50 | - | - | - | + | + | + | + |
| 40 | 60 | - | - | - | - | + | + | + |
| 30 | 70 | - | - | - | - | - | + | + |
| 20 | 80 | - | - | - | - | - | + | + |
| 10 | 90 | - | - | - | - | - | + | + |
| 0 | 100 | - | - | - | - | - | + | + |

Die erhaltenen Ergebnisse sind in der Tabelle zusammengefaßt. Sie belegen die Überlegenheit der erfindungsgemäßen Dispersionsklebstoffe gegenüber denen gemäß der DE 35 01 791 (Beispiel 2) bezüglich des Abbindeverhaltens (bis zu ca. 100 %), der Wärmefestigkeit (bis zu ca. 50 %) und der Wasserfestigkeit (bis zu 35 %). Bezüglich dieser drei wichtigen Eigenschaften ist sogar eine Verbesserung oder zumindest eine Gleichwertigkeit gegenüber der unmodifizierten Dispersion (Beispiel 1) festzustellen. Demgegenüber wurde auch noch die offene Zeit verbessert.

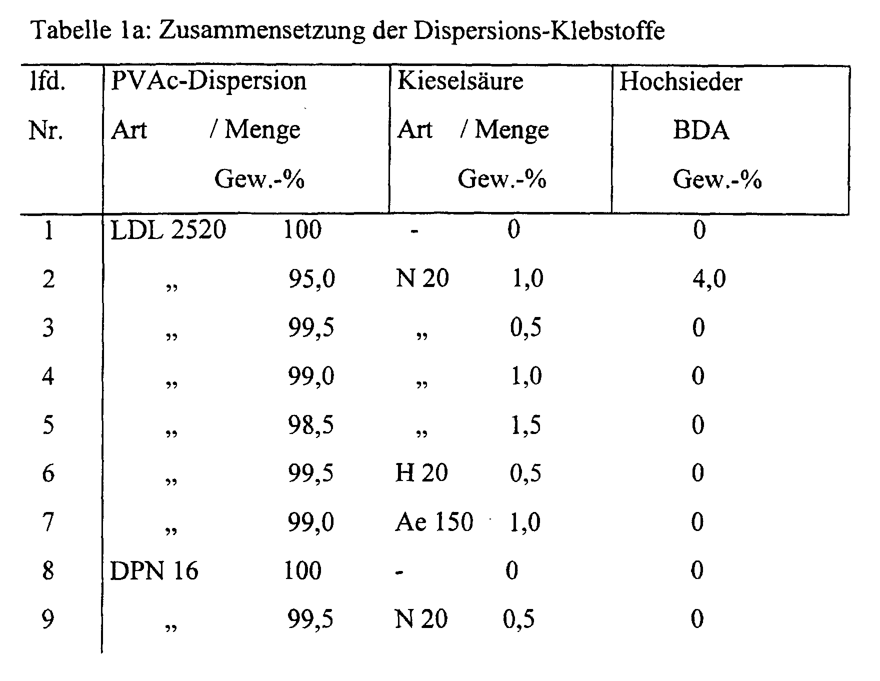

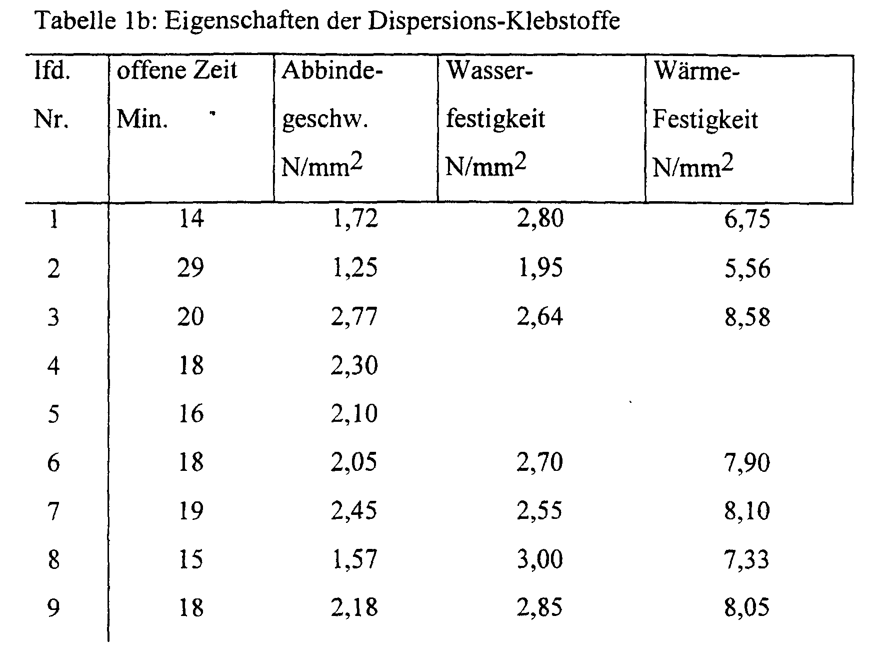

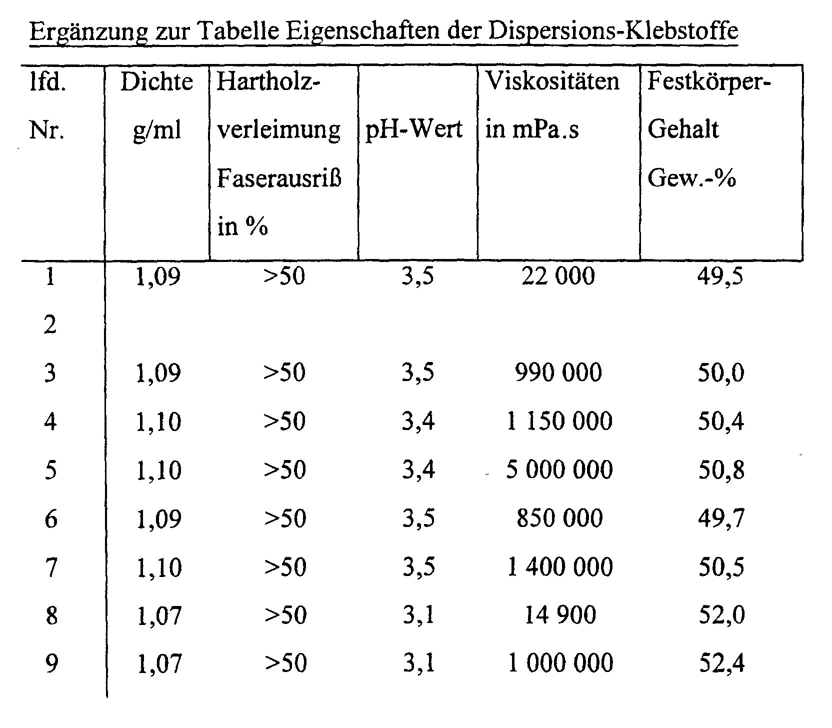

## Patentansprüche

1. Wäßriger Dispersions-Klebstoff auf der Basis von Polyvinylacetat mit mehr als 80 Gew.% an Vinylacetat als Bindemittel sowie einem Zusatz an pyrogener Kieselsäure, **dadurch gekennzeichnet, daß** er weniger als 4 Gew.-% an hochsiedendem Lösemittel mit einem Siedepunkt bei Normaldruck von mehr als 160 °C und 0,1 bis 2,0 Gew.-%, bezogen auf die Dispersion, an pyrogener Kieselsäure enthält, wobei die Kieselsäure mit Mischungen benetzbar ist, die mindestens 40 Volumen-Teile Wasser und höchstens 60 Volumenteile Methanol enthalten.

2. Dispersions-Klebstoff nach Anspruch 1, **dadurch gekennzeichnet, daß** das Polyvinylacetat ein Copolymer von Vinylacetat und Acrylamid, insbesondere N-Methylol-acrylamid ist, und zwar in einer Gewichtsmenge von bis zu 20 %, insbesondere bis zu 12 Gew.-%, bezogen auf die Monomeren insgesamt.

3. Dispersions-Klebstoff nach Anspruch 2, **dadurch gekennzeichnet, daß** die Polyvinylacetat-Dispersion einen pH-Wert nach DIN 53785 von weniger als 5,5, insbesondere weniger als 4,5 hat.

4. Dispersions-Klebstoff nach Anspruch 3, **dadurch gekennzeichnet, daß** Polyvinylalkohol als Schutzkolloid verwendet wird.

5. Dispersions-Klebstoff nach mindestens einem der Ansprüche 1 bis 4, **dadurch gekennzeichnet, daß** die Polyvinylacetat-Dispersion vernetzungsfähige Gruppen enthält, die zum Teil schon in dem Klebstoff reagiert haben und zum Teil erst nach dessen Auftrag reagieren.

6. Dispersions-Klebstoff nach mindestens einem der vorangegangenen Ansprüche, **dadurch gekennzeichnet, daß** die pyrogene Kieselsäure überwiegend hydrophil ist, wobei die Kieselsäure mit Mischungen benetzbar ist, die mindestens 60 Volumen-Teile Wasser und höchstens 40 Volumen-Teile Methanol enthalten.

7. Herstellung des Dispersions-Klebstoffes nach mindestens einem der vorangegangenen Ansprüche, **dadurch gekennzeichnet, daß** man die Dispersion vorlegt und die Kieselsäure einarbeitet.

8. Verwendung des Dispersions-Klebstoffes nach mindestens einem der Ansprüche 1 bis 6 in Kartuschen, Tuben, in Schlauchbeuteln oder Zweikammer-Aerosoldosen.

9. Verwendung des Dispersions-Klebstoffes nach mindestens einem der Ansprüche 1 bis 6 zum Verkleben von Holz- und Holzwerkstoffen oder deren Kombinationsverklebungen wie z.B. HPL - Holz (= high-pressure-laminate).

## Claims

1. Water-containing dispersion adhesive based on polyvinyl acetate containing more than 80% by weight of vinyl acetate as binder and an addition of pyrogenic silica, **characterized in that** it contains less than 4% by weight of high-boiling solvent with a boiling point at normal pressure of more than 160°C and 0.1 to 2.0% by weight, based on the dispersion, of pyrogenic silica, the silica being wettable with mixtures containing at least 40 parts by volume of water and at most 60 parts by volume of methanol.

2. A dispersion adhesive as claimed in claim 1, **characterized in that** the polyvinyl acetate is a copolymer of vinyl acetate and acrylamide, more particularly N-methylol acrylamide, in a quantity by weight of up to 20% and more particularly up to 12%, based on the monomers.

3. A dispersion adhesive as claimed in claim 2, **characterized in that** the polyvinyl acetate dispersion has a pH value to DIN 53785 of less than 5.5 and more particularly less than 4.5.

4. A dispersion adhesive as claimed in claim 3, **characterized in that** polyvinyl alcohol is used as protective colloid.

5. A dispersion adhesive as claimed in at least one of claims 1 to 4, **characterized in that** the polyvinyl acetate dispersion contains crosslinkable groups of which some have already reacted in the adhesive and some only react after application of the dispersion.

6. A dispersion adhesive as claimed in at least one of the preceding claims, **characterized in that** the pyrogenic silica is predominantly hydrophilic, the silica being wettable with mixtures containing at least 60 parts by volume of water and at most 40 parts by volume of methanol.

7. A process for the production of the dispersion adhesive claimed in at least one of the preceding claims, **characterized in that** the dispersion is introduced first and the silica is incorporated therein.

8. The use of the dispersion adhesive claimed in at least one of claims 1 to 6 in cartridges, tubes, tubular bags or two-chamber aerosol cans.

9. The use of the dispersion adhesive claimed in at least one of claims 1 to 6 for bonding wood and wood-based materials or laminates thereof such as, for example, HPL wood ( HPL = high-pressure laminate).

## Revendications

1. Colle en dispersion aqueuse à base de polyacétate de vinyle avec plus de 80% en poids d'acétate de vinyle comme liant ainsi qu'avec une addition d'acide silicique pyrogéne, **caractérisée en ce qu'**elle contient moins de 4% en poids de solvant à haut point d'ébullition avec un point d'ébullition à pression normale de plus de 160°C et 0,1 à 2,0% en poids, sur base de la dispersion, d'acide silicique pyrogène, l'acide silicique pouvant être humidifié avec des mélanges qui contiennent au moins 40 parties en volume d'eau et tout au plus 60 parties en volume de méthanol.

2. Colle en dispersion selon la revendication 1, **caractérisée en ce que** le polyacétate de vinyle est un copolymère d'acétate de vinyle et d'acrylamide, en particulier de N-méthylolacrylamide, et dans une quantité en poids de jusque 20%, en particulier jusque 12% en poids, sur base des monomères totaux.

3. Colle en dispersion selon la revendication 2, **caractérisée en ce que** la dispersion de polyacétate de vinyle a un pH conforme à la norme DIN 53 785 de moins de 5,5, en particulier de moins de 4,5.

4. Colle en dispersion selon la revendication 3, **caractérisée en ce que** l'alcool de polyvinyle est utilisé comme colloïde protecteur.

5. Colle en dispersion selon au moins l'une des revendications 1 à 4, **caractérisée en ce que** la dispersion de polyacétate de vinyle contient des groupements pouvant réticuler qui ont parfois déjà réagi dans la colle et ne réagissent parfois qu'après leur application.

6. Colle en dispersion selon au moins l'une des revendications précédentes, **caractérisée en ce que** l'acide silicique pyrogène est principalement hydrophile, l'acide silicique pouvant être humidifié avec des mélanges qui contiennent au moins 60 parties en volume d'eau et tout au plus 40 parties en volume de méthanol.

7. Préparation de la colle en dispersion selon au moins l'une des revendications précédentes, **caractérisée en ce que** l'on introduit préalablement la dispersion et que l'on incorpore l'acide silicique.

8. Utilisation de la colle en dispersion selon au moins l'une des revendications 1 à 6 dans des cartouches, des tubes, dans des sachets en tuyau ou des bombes aérosols à deux chambres.

9. Utilisation de la colle en dispersion selon au moins l'une des revendications 1 à 6 pour coller du bois et des matériaux à base de bois ou leurs collages combinés comme par exemple le bois HPL (= stratifié haute pression).
